(19) Europäisches Patentamt
European Patent Office
Office européen des brevets

(11) Numéro de publication: 0 139 602
A2

(12) **DEMANDE DE BREVET EUROPEEN**

(21) Numéro de dépôt: 84420173.1

(22) Date de dépôt: 16.10.84

(51) Int. Cl.[4]: C 08 K 5/34
C 08 L 21/00

(30) Priorité: 19.10.83 FR 8316854

(43) Date de publication de la demande: 02.05.85 Bulletin 85/18

(84) Etats contractants désignés: AT BE CH DE FR GB IT LI LU NL SE

(71) Demandeur: VULNAX INTERNATIONAL LIMITED
Immeube "Le Directoire" 321, bureaux de la Colline
F-92213 Saint-Cloud Cédex(FR)

(72) Inventeur: Sambuis, Bernard
9, avenue Auguste Candolle
F-91230 Montgeron(FR)

(72) Inventeur: Gavory, Daniel
115, rue des Templiers
F-91360 EPINAY SUR ORGE(FR)

(74) Mandataire: Rioufrays, Roger
RHONE-POULENC RECHERCHES Service Brevets Chimie et Polymères Centre de Recherches de Saint-Fons B.P. 62
F-69192 St-Fons Cedex(FR)

(54) **Procédé de stabilisation d'élastomères caoutchouteux vis-à-vis de l'ozone et compositions élastomériques stabilisées.**

(57) Procédé de protection des caoutchoucs naturels ou synthétiques vis-à-vis de l'action néfaste de l'ozone consistant à leur incorporer une quantité efficace d'un lactame.

EP 0 139 602 A2

Croydon Printing Company Ltd.

# PROCEDE DE STABILISATION D'ELASTOMERES CAOUTCHOUTEUX VIS-A-VIS DE L'OZONE ET COMPOSITIONS ELASTOMERIQUES STABILISEES

La présente invention a pour objet un procédé de stabilisation des caoutchoucs naturels et synthétiques sensibles à l'action néfaste de l'ozone et les compositions stabilisées à base de tels caoutchoucs ainsi obtenues.

Il est bien connu que certains polymères, et plus particulièrement les vulcanisats d'élastomères incomplètement saturés, sont très sensibles à l'action de l'ozone. Parmi ces élastomères on peut citer : le caoutchouc naturel, les caoutchoucs synthétiques tels que les homopolymères et copolymères des diènes conjugués entre eux ou avec des monomères vinyliques et notamment le polybutadiène, le polyisoprène, les copolymères isobutylène/isoprène, les copolymères styrène/butadiène ou acrylonitrile/butadiène, le polychloroprène.

Lorsque les élastomères caoutchouteux sont soumis à l'action d'une contrainte, l'action néfaste de l'ozone se manifeste par l'apparition de craquelures de surface orientées perpendiculairement au sens de la contrainte. Si cette contrainte subsiste ou chaque fois qu'elle se produit les craquelures se développent en profondeur et peuvent causer la rupture complète des vulcanisats. La sensibilité des élastomères à l'ozone est évidemment fonction de divers paramètres tels que la nature de l'élastomère, la concentration en ozone du milieu ambiant, la température et la durée d'exposition, la valeur de la contrainte subie par le caoutchouc. L'air atmosphérique contient une quantité non négligeable d'ozone, variable suivant les points géographiques considérés et la plupart des articles en élastomères vulcanisés sont normalement soumis à des contraintes ; c'est le cas en particulier des pneumatiques. On voit donc l'intérêt qu'il y a à protéger ces élastomères vulcanisés pour leur éviter une dégradation trop rapide.

On a proposé différents procédés de protection des caoutchoucs vi-à-vis de l'action néfaste de l'ozone. Ainsi on a proposé d'incorporer aux caoutchoucs des cires microcristallines dont l'exsudation permettait de former un écran protecteur à la surface des élastomères. Cette barrière physique n'a d'efficacité qu'autant qu'elle n'est pas rompue par

un phénomène extérieur de sorte que ce mode de protection, excellent pour des élastomères utilisés dans des conditions statiques, devient inopérant lorsque les élastomères vulcansisés sont soumis à un effort dans des conditions dynamiques. En pareil cas il est préférable d'avoir recours à l'addition de composés chimiques antiozone qui retardent l'apparition des craquelures dans les conditions d'utilisation des élastomères statiques et/ou dynamiques.

On a proposé l'emploi de très nombreux composés chimiques comme agents antiozone et cependant le problème de la protection des vulcanisats de caoutchoucs n'a pas été résolu de façon satisfaisante de sorte que l'industrie est encore à la recherche de composés permettant de le résoudre sans créer pour autant d'autres difficultés. On a constaté en effet qu'il n'est pas suffisant qu'un composé chimique présente un bon pouvoir de protection vis-à-vis de l'ozone pour être un bon stabilisant si son utilisation s'accompagne d'inconvénients liés à des effets secondaires indésirables soit au niveau de la préparation des vulcanisats, soit au niveau des produits finis, soit encore au plan de sa manipulation et de son incorporation dans les mélanges-maîtres. Ainsi il est bien connu que de nombreux produits présentant une excellente activité antiozone se signalent également par leur aptitute à colorer ou à tacher les vulcanisats qui les contiennent. De tels agents antiozone ne peuvent donc être utilisés pour la protection des élastomères clairs ou blancs et même pour la protection d'élastomères noirs en contact avec des pièces de teintes claires quelle qu'en soit la nature (métallique, caoutchouteuse ou à base de matière plastique). Il arrive en effet dans ce dernier cas que les agents antiozone migrent de l'élastomère sur les parties claires voisines sur lesquelles ils développent des colorations et/ou des tâches. On a encore constaté que de nombreux agents antiozone perturbent le déroulement de la-vulcanisation soit parce qu'ils en diminuent la vitesse soit au contraire parce qu'ils l'accélèrent dans des proportions telles qu'ils engendrent le phénomène bien connu du grillage.

La présente invention se propose précisément de résoudre les problèmes précités relatifs à la protection des élastomères caoutchouteux vis-à-vis de l'action néfaste de l'ozone par la mise en oeuvre de composés présentant une excellente activité antiozone et dépourvus des

inconvénients des composés connus. Ainsi, un premier objet de la présente invention réside dans un nouveau procédé pour protéger les élastomères caoutchouteux contre l'attaque de l'ozone par l'emploi de nouveaux composés antiozone ; un deuxième objet de la présente invention réside dans les élastomères protégés ainsi obtenus ; un troisième objet de la présente invention réside dans un procédé visant à faciliter l'introduction des agents antiozone dans le caoutchouc ; un quatrième objet de la présente invention réside dans des compositions nouvelles à base d'agents antiozone facilitant l'introduction de ces derniers dans le caoutchouc.

Plus spécifiquement la présente invention a pour objet un procédé de protection des caoutchoucs naturels et synthétiques vis-à-vis de l'action de l'ozone caractérisé en ce qu'on leur incorpore une quantité efficace d'un lactame de formule générale :

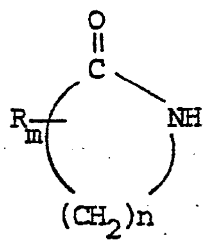

(I)

dans laquelle :

n est un nombre entier de 3 à 20

m est 1 ou 2

R est un radical alkyle inférieur ou un radical phényle.

Par radical alkyle inférieur on désignera par la suite un radical alkyle linéaire ou ramifié comportant de 1 à 4 atomes de carbone tels que les radicaux méthyle, éthyle, n-propyle, isopropyle, isobutyle.

Comme exemple de lactames convenant à la mise en oeuvre du procédé selon la présente invention on peut citer le γ-butyrolactame (pyrrolidone), le δ-valérolactame (pipéridone-2), le γ-valerolactame, le δ-caprolactame, l'ε-caprolactame, le ζ-enantholactame, le capryllactame, l'ω-nonanolactame, l'ω-décanolactame, l'ω-undécanolactame, l'ω-dodécanolactame (lauryllactame), la méthyl-4 pipéridone-2, la phényl-5 pipéridone-2, la phényl-6 pipéridone-2, l'éthyl-5 caprolactame, le

t-butyl-5 caprolactame, l'isopropyl-5 caprolactame, le méthyl-3 caprolactame, le méthyl-5 caprolactame, le méthyl-4 isopropyl-7 caprolactame, le méthyl-4 ζ-énantholactame, le méthyl-5 énantholactame, le méthyl-7 énantholactame, le méthyl-4 éthyl-8 énantholactame, le pentadécanolactame, l'octadécanolactame.

Parmi ces lactames on fait appel de préférence à ceux comportant de 6 à 12 atomes de carbone intranucléaires. L'ε-caprolactame et ses dérivés mono- ou dialkylsubstitués conviennent tout spécialement bien.

L'emploi des lactames comme agents antiozone dans le caoutchouc se révèle tout particulièrement avantageux en raison du pouvoir stabilisant élevé de ces composés vis-à-vis de l'action néfaste de l'ozone sur les caoutchoucs soumis à des contraintes et de leur caractère non photosensible qui autorise leur utilisation dans les caoutchoucs blancs ou clairs ou les caoutchoucs noirs destinés à être mis en contact avec des objets blancs ou de teinte claire.

La quantité de lactame introduite dans le caoutchouc varie en fonction de la nature de ce dernier. On sait en effet que la sensibilité des caoutchoucs à l'action dégradante de l'ozone dépend, toutes choses égales par ailleurs, de la nature du caoutchouc. Cette quantité dépend également d'autres facteurs tels que les diverses conditions d'utilisation des objets finis caoutchouteux. Elle doit donc être déterminée dans chaque cas particulier pour limiter, voire empêcher, toute action de dégradation de l'ozone. D'une manière générale la quantité de lactame peut être comprise entre 0,1 et 5 % en poids du caoutchouc. On pourrait naturellement avoir recours à des quantités de lactames représentant plus de 5 % en poids de l'élastomère.

On ne sortirait pas du cadre de la présente invention en ayant recours à des mélanges de deux ou plus de deux lactames.

Les agents antiozones selon l'invention peuvent être utilisés seuls ou en association avec d'autres agents stabilisants tels que les antioxydants, les stabilisants thermiques, les stabilisants lumière.

Bien que le mode d'introduction des lactames dans les caoutchoucs ne soit pas critique, il est préférable de les incorporer à ces derniers avant vulcanisation. En pareil cas l'agent antiozone peut être ajouté en même temps que les autres adjuvants ou séparément.

L'incorporation et la répartition homogène du ou des lactames peut être réalisée par recours aux techniques classiques de broyage et/ou de mastication.

Un mode particulièrement avantageux d'introduction des lactames dans les caoutchoucs consiste à les dissoudre dans un composé liquide miscible aux caoutchoucs. A cet effet on a recours de préférence à un adjuvant liquide usuel des caoutchoucs et plus particulièrement à un antioxydant liquide. A cet égard les antioxydants phénoliques liquides des caoutchoucs et solvant des lactames conviennent tout particulièrment bien pour réaliser des solutions de lactames facilitant l'introduction de ces derniers dans les caoutchoucs par les procédés usuels de mélangeage avant vulcanisation.

La présente invention a donc encore pour objet un procédé de protection des caoutchoucs naturel et synthétique contre l'action néfaste de l'ozone caractérisé en ce que leur incorpore un lactame tel que ceux définis plus haut en solution dans un véhicule liquide miscible au caoutchouc, et de préférence dans un antioxydant phénolique liquide.

La présente invention a encore pour objet les compositions stabilisantes liquides constituées par une solution d'un lactame tel que ceux définis précédemment dans un antioxydant phénolique liquide.

L'introduction des lactames dans les caoutchoucs sous forme de solutions convient tout particulièrement bien à l'emploi comme agent antiozone de l' -caprolactame dont l'hygroscopicité crée des problèmes de stockage et de manipulation qui rendent difficile l'utilisation industrielle de ce composé.

Comme véhicule liquide du lactame on utilise plus particulièrement des polyalkylphénols ou leurs mélanges, ou des phénols comportant un ou plusieurs groupes phényléthyle (phénols styrénés) : cf. J.R.DUNN Rubber Chemistry and Technology 47 page 960 et suivantes (1974), H.J.STERN Rubber Natural and Synthetic (Mc LAREN Editions).

Une classe d'antioxydants phénoliques qui répond tout particulièrement bien à ce besoin est constituée par les phénols liquides pris dans la famille des phénols de formule générale :

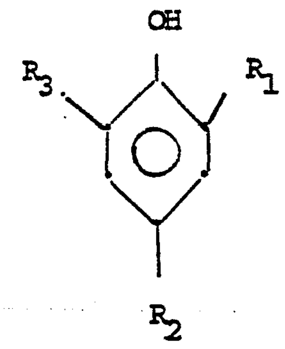

(II)

dans laquelle :

- $R_1$ est un radical cycloalkyle mono- ou polycyclique éventuellement substitué par un ou plusieurs radicaux méthyle ;

- $R_2$ et $R_3$ représentent des radicaux alkyles inférieurs et de préférence des groupes méthyle.

Plus spécifiquement $R_1$ représente dans la formule (II) un radical cyclopentyle, cyclohexyle, méthyl-2 cyclohexyle, méthyl-3 cyclohexyle, diméthyl-2,4 cyclohexyle.

Le (méthyl-2 cyclohexyle)-2 diméthyl-4,6 phénol convient tout particulièrement bien comme solvant de l'ε-caprolactame.

La concentration du lactame dans l'antioxydant liquide peut varier dans de larges limites et dépend évidemment des quantités respectives de chacun des composants nécessaires pour assurer une bonne protection du caoutchouc, quantités qui varient elles-mêmes suivant la nature du caoutchouc. Sur un plan pratique il s'avère particulièrement commode de disposer de solutions comportant au moins 50 % en poids de lactame.

Le procédé de protection des caoutchoucs selon la présente invention s'applique à tous les élastomères caoutchouteux sensibles à l'ozone. On peut citer notamment le caoutchouc naturel et les caoutchoucs synthétiques du type des polymères des diènes conjugués (polybutadiène, polyisoprène, polychloroprène) et de leurs copolymères soit entre eux (copolymères styrène/butadiène), soit avec des monomères monoéthyléniques (styrène, acrylonitrile, méthacrylonitrile).

Les exemples suivants illustrent l'invention et montrent comment elle peut être mise en pratique. Dans ces exemples le pouvoir antizone des lactames a été comparé à celui d'un agent antiozone connu et

largement utilisé industriellement : la N-phényl N'-isopropyl p-phénylènediamine.

EXEMPLES 1 à 5

On a testé l'activité antiozone de divers lactames sur un caoutchouc naturel vendu sous la marque commerciale SMR 5 en utilisant le mélange-maître suivant :

| Matière | Parties en poids |
|---|---|
| Caoutchouc naturel | 100 |
| Oxyde de zinc | 5 |
| Acide stéarique | 2 |
| Noir de carbone N 330 | 50 |
| Goudron de pin | 3 |
| Soufre | 1,5 |
| N-cyclohexyl-2 benzothiazolylsulfénamide (CBS) | 0,5 |
| lactame | 2 |

Le mélange a été préparé de la manière suivante :

Dans un mélange Banbury type B, on ajoute :

- au temps zéro : le caoutchouc naturel
- après 2 minutes : la moitié du noir de carbone
- après 3 minutes : le reste du noir, l'oxyde de zinc, le goudron de pin
- après 4 minutes 1/2 : l'acide stéarique.

On décharge le mélange au bout de 6,5 minutes et on le laisse refroidir.

On forme une bande du mélange précédent sur mélangeur à cylindres à caoutchouc (cylindres 150 x 300 mm).

On ajoute ensuite le système vulcanisant (soufre et CBS) et le lactame.

On laisse sur mélangeur jusqu'à l'obtention d'un mélange homogène.

Les mélanges sont ensuite vulcanisés sous presse à 153°C à l'optimum de vulcanisation (défini à l'aide d'un élastomètre à rotor

oscillant) en plaques de 2 mm d'épaisseur.

Les mélanges ont ensuite été exposés à l'ozone dans les conditions suivantes :

- concentration en ozone régulée 50 ppcm (partie pour $10^8$ parties d'air),
- température : 40°C
- Exposition des éprouvettes :
  statiques : soumises à un allongement de 10 %
  dynamiques : soumises à des allongements croissant de 0 à 25 % d'allongement à raison de 30 cycles/minute.

On a suivi visuellement périodiquement l'état des éprouvettes et noté le temps nécessaire pour obtenir des craquelures de dimensions moyennes visibles à l'oeil nu.

Le même essai a été reproduit, à titre comparatif, d'abord sans agent antiozone puis en remplaçant le lactame par la N-phényl N'-isopropyl para-phénylène diamine, agent antiozone connu et largement utilisé.

| EXEMPLES/ ESSAIS | Produit utilisé | Temps opitmum de vulcanisation à 153°C (en mn) | Temps (en heures) pour obtenir un état de craquelures "moyen" | |
|---|---|---|---|---|
| | | | Exposition statique | Exposition dynamique |
| 1 | pyrrolidinone-2 | 8 | 65 | 70 |
| 2 | ε-caprolactame | 7 | 86 | 170 |
| 3 | ζ-enantholactame (aza-2 cyclooctanone) | 7,5 | 120 | 160 |
| 4 | capryllactame (aza-2 cyclononanone) | 8 | 120 | 160 |
| 5 | lauryllactame (aza-2 cyclotridécanone) | 10 | 80 | 110 |
| A | AUCUN | 12 | 24 | 35 |
| B | N-phényl N'-isoproyl p-phénylènediamine | 11 | 48 | 135 |

EXEMPLE 6

Le but de cet exemple est de montrer l'action antiozone de l'ε-caprolactame dans un polyisoprène de synthèse vendu sous la marque commerciale NATSYN 2200.

La formulation du mélange était la suivante :

polyisoprène de synthèse ...................... 100 (Natsyn 2200)
noir de carbone N 330 ........................ 50
plastifiant aromatique (marque commerciale
Dutrex 729 FC) ................................ 5
oxyde de zinc .................................. 5
acide stéarique ............................... 3
soufre .......................................... 2
N-cyclohexylbenzothiazolyl-2 sulfénamide (CBS). 1
caprolactame .................................. 2

Le mélange a été préparé en mélangeur interne type Banbury B. Seuls le système vulcanisant et l'agent protecteur ont été introduits ultérieurement sur mélangeurs à cylindres. Le processus a été le même que dans les exemples 1 à 5.

Les mélanges ont ensuite été vulcanisés sous pression à l'optimum à 153°C en plaques de 2 mm d'épaisseur.

Les mélanges ont été exposés à l'ozone dans les mêmes conditions qu'aux exemples 1 à 5.

On a noté les temps pour obtenir un état "moyen" des craquelures. Les résultats sont indiqués dans le tableau ci-après.

| EXEMPLES/ ESSAIS | Produit utilisé | Temps (en heures) pour obtenir un état de craquelures "moyen" | |
|---|---|---|---|
| | | Exposition statique | Exposition dynamique |
| 6 | ε-caprolactame | 69 | 86 |
| C | AUCUN | 2,75 | 3,7 |

EXEMPLE 7

Dans cet exemple on a testé le pouvoir antizone de l'ε-caprolactame dans un polybutadiène vendu sous la marque commerciale BR 1220. Le produit a été testé dans le mélange constitué des ingrédients suivants :

polybutadiène .................................. 100
noir de carbone N 330 ......................... 50
plastifiant aromatique (Dutrex 729 FC) ........ 8
oxyde de zinc .................................. 5
acide stéarique ................................ 2
soufre ......................................... 2
N-cyclohexylbenzothiazolyl-2 sulfènamide (CBS). 1
ε-caprolactame ................................. 2

Le mélange, à l'exception du soufre, de l'accélérateur de vulcanisation du système protecteur a été préparé en mélangeur interne Banbury type B.

Les ingrédients manquants ont ensuite été incorporés sur mélangeurs à cylindres, comme indiqué à l'exemple 1.

Les mélanges ont ensuite été vulcanisés sous presse en moules à 153° en palques de 2 mm d'épaisseur à l'optimum de vulcanisation.

Des éprouvettes de 2 mm d'épaisseur ont ensuite été exposées à l'ozone dans les conditions indiquées à l'exemple 1.

Les résultats sont indiqués dans le tableau ci-après.

| EXEMPLES/ ESSAIS | Produit utilisé | Temps (en heures) pour obtenir un état de craquelures "moyen" | |
|---|---|---|---|
| | | Exposition statique | Exposition dynamique |
| 7 | ε-caprolactame | 8 | 49 |
| D | AUCUN | 2,7 | 1,5 |

EXEMPLE 8

Dans cet exemple l'ε-caprolactame a été testé dans le mélange de base ci-dessous comme agent antiozone :

caoutchouc nitrile ............................ 100 (marque commerciale Butacril BT 205)
noir de carbone N 330 ......................... 50
oxyde de zinc ................................. 5
acide stéarique ............................... 2
phatlate de butyle ............................ 25
soufre ........................................ 2
N-cyclohexylbenzothiazolyl-2 sulfènamide (CBS). 0,75
disulfure tétraméthylthiurame ................. 0,25

ε -caprolactame ................................ 2

Le mélange, à l'exception du soufre, de l'accélérateur de vulcanisation et du système protecteur, a été préparé en mélangeur interne Banbury type B.

Les ingrédients manquants ont ensuite été ajoutés sur mélangeurs à cylindres comme indiqué à l'exemple 1.

Les mélanges ont ensuite été vulcanisés, sous presse, à 153°C, en plaques de 2 mm d'épaisseur à l'optimum de vulcanisation. Des éprouvettes de 2 mm d'épaisseur ont ensuite été exposées à l'ozone dans les conditions de l'exemple 1.

On a noté les temps pour obtenir un état moyen des craquelures. Les résultats sont indiqués ci-dessous :

| EXEMPLES/ ESSAIS | Produit utilisé | Temps (en heures) pour obtenir un état de craquelures "moyen" | |
|---|---|---|---|
| | | Exposition statique | Exposition dynamique |
| 8 | ε-caprolactame | 6 | 14 |
| E | AUCUN | 4 | 3,6 |

EXEMPLE 9

Le but de cet exemple est de montrer l'action antiozone de l'ε-caprolactame dans un coupage de caoutchouc naturel et de caoutchouc styrène/butadiène. Le produit a été testé dans le mélange constitué des ingrédients suivants :

| | |
|---|---|
| caoutchouc naturel ........................... | 50 |
| copolymère styrène/butadiène vendu sous la marque commerciale SBR 1500 .................. | 50 |
| oxyde de zinc ................................ | 5 |
| acide stéarique .............................. | 2 |
| noir de carbone N 330 ........................ | 50 |
| plastifiant .................................. | 8 |
| soufre ....................................... | 2,25 |
| N-cyclohexylbenzothiazolyl-2 sulfènamide (CBS). | 0,75 |
| ε-caprolactame ............................... | 2 |

Le mélange a été préparé en mélangeur interne type Banbury B. Seuls le système vulcanisant et l'agent protecteur ont été introduits ultérieurement sur mélangeurs à cylindres comme indiqué à l'exemple 1.

les mélanges ont ensuite été vulcanisés en moules, sous presse à 153°C en plaques de 2 mm d'épaisseur.

Les mélanges ont ensuite été exposés à l'ozone avec les conditions suivantes :

- concentration en ozone régulée : 50 ppcm
- température 40°C
- exposition des éprouvettes : dynamique 25 % d'allongement à raison de 30 cycles/minute

On a suivi visuellement périodiquement l'état des éprouvettes et noté le nombre d'heures pour obtenir un état moyen des craquelures.

| EXEMPLES/ ESSAIS | Produit essayé | Temps (en heures) pour obtenir un état moyen des craquelures (exposition dynamique) |
|---|---|---|
| 9 | ε-caprolactame | 4 |
| F | AUCUN | 2,25 |

EXEMPLES 10 à 14

Le but de cet exemple est de montrer que les lactames ne sont pas colorants. Ils ont été essayés dans la formule suivante :

| | |
|---|---|
| caoutchouc naturel (crêpe pâle)................ | 100 |
| oxyde de zinc .................................. | 5 |
| acide stéarique ................................ | 1 |
| oxyde de titane ................................ | 20 |
| kaolin (Whitetex No. 2 ) ...................... | 15 |
| silice précipitée (marque commerciale Zéosil 175 MP) ................................. | 15 |
| polyéthylèneglycol ............................. | 1 |
| monosulfure de tétraméthyl thiurame ........... | 0,5 |
| soufre ......................................... | 2,5 |
| lactames ....................................... | 2 |

Le mélange, à l'exception du système vulcanisant et des produits de l'invention a été préparé en mélangeur interne Banbury type B.

Les ingrédients manquants ont été ajoutés ensuite sur mélangeurs à cylindres.

Les mélanges ont ensuite été vulcanisés sous presse, en plaques

de 2 mm d'épaisseur, à 153°C, à l'optimum.

Des éprouvettes de mélange ont ensuite été exposées à la lumière dans un test de vieillissement accéléré. On a utilisé un appareil dont le spectre est très riche en rayons U.V. Les éprouvettes ont été exposées pendant 100 heures.

On a noté la couleur des éprouvettes.

Les résultats du tableau ci-dessous montrent clairement la non photosensibilité des produits de l'invention :

| EXEMPLES/ ESSAIS | Produit essayé | Couleur des éprouvettes | |
|---|---|---|---|
| | | avant vieillissement | après 100 h d'exposition |
| G | AUCUN | blanc | jaune pâle |
| 10 | pyrrolidinone-2 | id | id |
| 11 | ε-caprolactame | id | id |
| 12 | aza-2 cyclooctanone | id | id |
| 13 | aza-2 cyclononanone | id | id |
| 14 | aza-2 cyclotridécanone | id | id |
| H | N-phényl N'-isopropyl p-phénylène-diamine | marron clair | marron foncé |

EXEMPLE 15

Dans un ballon muni d'une agitation on charge 100 parties en poids de (méthyl-2 cyclohexyl)-2 diméthyl-4,6 phénol (MDCP). On agite lentement et on chauffe jusqu'à la température de 55-60°C, ensuite on

ajoute progressivement 100 parties en poids de caprolactame et on poursuit le chauffage jusqu'à la température de 85°C environ : cette température est maintenue pendant 15 minutes. On obtient une solution limpide que l'on refroidit à 20°C. On utilise cette solution pour stabiliser du caoutchouc naturel.

La formule du mélange est la suivante :

| | |
|---|---|
| caoutchouc naturel SMR L .............. | 100 g |
| oxyde de zinc ......................... | 5 g |
| acide stéarique ....................... | 1 g |
| oxyde de titane ....................... | 20 g |
| kaolin (Whitetex No. 2) ............... | 15 g |
| silice (Zeosil 175 MP) ................ | 15 g |
| polyéthylène glycol ................... | 1 g |
| N-cyclohexyl-2 benzothiazyl sulfénamide | 1 g |
| soufre ................................ | 2 g |
| solution de caprolactame .............. | 3 g |

Le mélange a été préparé en mélangeur interne type Banbury B. Seuls le système vulcanisant et l'agent protecteur ont été introduits ultérieurement sur mélangeurs à cylindres comme à l'exemple 1.

Les mélanges ont ensuite été vulcanisés sous presse en moules à 153°C en plaques de 2 mm d'épaisseur à l'optimum.

Les mélanges ont ensuite été exposés à l'ozone dans les mêmes conditions qu'à l'exemple 1.

0139602

| PRODUIT UTILISE | TEMPS OPTIMUM DE VULCANISATION A 153°C EN MINUTES | TEMPS EN HEURES POUR OBTENIR UN ETAT DE CRAQUELURES MOYEN | |
|---|---|---|---|
| | | Exposition statique | Exposition dynamique |
| mélange de caprolactame et de MDCP (50-50) | 10 | 54 | 74 |
| aucun | 15 | 7 | 3 |

REVENDICATIONS

1°) Procédé de protection des caoutchoucs naturels et synthétiques vis-à-vis de l'action de l'ozone caractérisé en ce qu'on leur incorpore une quantité efficace d'un lactame de formule générale :

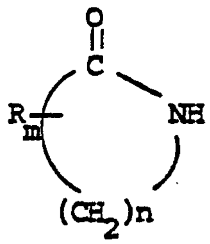

(I)

dans laquelle :

n est un nombre entier de 3 à 20

m est 1 ou 2

R est un radical alkyle inférieur ou un radical phényle.

2°) Procédé de protection des caoutchoucs naturels et synthétiques selon la revendication 1 caractérisé en ce qu'on utilise comme lactame la pyrrolidinone-2, l'ε-caprolactame, l' ζ-énantholactame (aza-2 cyclooctanone), le capryllactame (aza-2 cyclononanone), le lauryllactame (aza-2 cyclotridécanone)

3°) Procédé de protection des caoutchoucs naturels et synthétiques selon la revendication 2 caractérisé en ce que la quantité de lactame représente de 0,1 à 5 % en poids du caoutchouc.

4°) Procédé de protection des caoutchoucs naturels et synthétiques selon la revendication 2 caractérisé en ce que le lactame est incorporé au caoutchouc avant vulcanisation sous forme d'une solution dans un véhicule liquide miscible au caoutchouc.

5°) Procédé de protection des caoutchoucs naturels et synthétiques selon la revendication 4 caractérisé en ce que le véhicule liquide est un antioxydant phénolique liquide.

6°) Procédé de protection des caoutchoucs naturels et synthétiques selon la revendication 5 caractérisé en ce que le véhicule liquide est un antioxydant phénolique liquide pris dans la famille des phénols de formule générale :

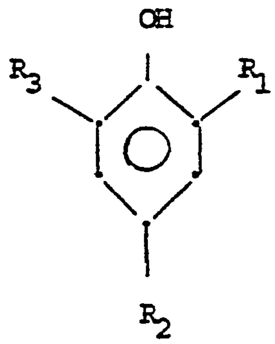

(II)

dans laquelle :

- $R_1$ est un radical cycloalkyle mono- ou polycyclique éventuellement substitué par un ou plusieurs radicaux méthyle ;

- $R_2$ et $R_3$ représentent des radicaux alkyles inférieurs et de préférence des groupes méthyle.

7°) Procédé de protection des caoutchoucs naturels et synthétiques selon la revendication 6 caractérisé en ce que l'antioxydant phénolique est le (méthyl-2 cyclohexyle)-2 diméthyl-4,6 phénol.

8°) Procédé de protection des caoutchoucs naturels et synthétiques selon l'une quelconque des revendications 1 à 7 caractérisé en ce que l'on incorpore au caoutchouc une quantité efficace d'une solution d'ε-caprolactame dans le (méthyl-2 cyclohexyle)-2 diméthyl-4,6 phénol.

9°) Composition stabilisante pour la mise en oeuvre du procédé selon l'une quelconque des revendications 1 à 8 caractérisée en ce qu'elle consiste en une solution de lactame de formule générale :

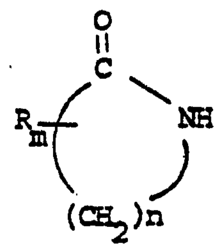

(I)

dans laquelle :

n est un nombre entier de 3 à 20

m est 1 ou 2

R est un radical alkyle inférieur ou un radical phényle.

dans un phénol liquide pris parmi les composés de formule :

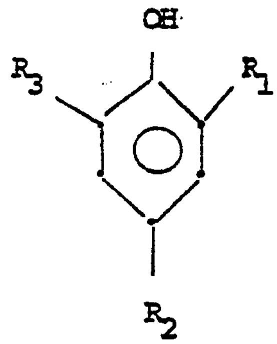

(II)

dans laquelle :

- $R_1$ est un radical cycloalkyle mono- ou polycyclique éventuellement substitué par un ou plusieurs radicaux méthyle ;

- $R_2$ et $R_3$ représentent des radicaux alkyles inférieurs et de préférence des groupes méthyle.

10°) Composition stabilisante pour la mise en oeuvre du procédé selon l'une quelconque des revendications 1 à 8 caractérisée en ce qu'elle consiste en une solution d'ε-caprolactame dans le (méthyl-2 cyclohexyle)-2 diméthyl-4,6 phénol.

11°) Caoutchoucs naturels ou synthétiques présentant une stabilité améliorée vis-à-vis de l'action néfaste de l'ozone cararactérisés en ce qu'ils contiennent une quantité efficace d'un lactame.